# EUROPEAN PATENT APPLICATION

(11) **EP 4 525 323 A1**
(43) Date of publication of application: **19.03.2025**
(21) Application number: 23196822.3
(22) Date of filing: 12.09.2023
(51) Int. Cl.: H04B 7/06

(54) **METHOD TO PERFORM A BEAM MANAGEMENT PROCEDURE, ANTENNA DEVICE, DEVICE COMPRISING AN ANTENNA DEVICE, CONTROL UNIT FOR AN ANTENNA DEVICE, COMPUTER PROGRAM PRODUCT AND COMPUTER-READABLE STORAGE MEDIUM**

(71) Applicant: Siemens Aktiengesellschaft, 80333 München (DE)
(72) Inventor: Bhadauria, Shubhangi, 81477 München (DE); Walewski, Joachim, 82008 Unterhaching (DE)
(74) Representative: Siemens Patent Attorneys

(57) **Abstract**

The invention is related to a method to perform a beam management procedure for selecting a beam (12) of a first antenna device (1) to establish a data link between the first antenna device (1) and a second antenna device (5),the method comprises steps of determining a spatial direction (16) of the second antenna device (5) with respect to the first antenna device (1) as a function of location data (14) of the first antenna device (1) and location data (15) of the second antenna device (5) by the first antenna device (1); and determining the chosen spatial search range (21) as a function of the spatial direction (16) of the second antenna device (5) with respect to the first antenna device (1) according to a predefined range specification by the first antenna device (1), wherein the chosen spatial search range (21) is constrained against a maximum spatial search range (4) of the first antenna device (1).

## Description

The invention relates to a method to perform a beam management procedure, an antenna device, a control unit for an antenna device, a computer program product and a computer-readable storage medium.

This invention relates to beam selection of antenna devices in 5G, which may be related to the P1, P2 and P3 procedures disclosed in clause 6.1.6.1 of 3GPP TR 38.802. Beam selection may be performed by two of the antenna devices to allow a communication link between the two antenna devices. The two antenna devices may comprise a user equipment, UE and a transmission reception point, TRP, of a base station or two of the user equipment. The direct communication link between two UEs is called sidelink.

Beam selection is an important issue when at least one device, either the user equipment, UE, or the base station, uses MIMO, multiple input multiple output, and/or when both operate in a frequency band above 6 GHz, known as Frequency Range 2.

In order for the UE to register with a 5G base station, the UE investigates which direction of reception of the UE provides a highest signal strength for receiving signals from the 5G base station. In a later step, the 5G base station also investigates a direction of reception of the 5G base station providing a highest signal strength for receiving signals from the UE. The standardised 5G procedure of the 5G beam selection process relies solely on the received signal strengths for selecting the directions of reception and transmission and does not take the spatial configuration of a UE-base station pair into account. This invention integrates spatial information into the 5G beam selection process to speed up beam selection and optimisation.

This invention also addresses beam selection in 5G for scenarios involving mobility such as vehicle-to-everything communication using sidelink, SL. This is a very important issue when either the UE or the base station uses MIMO, multiple input multiple output transceivers, and/or operates in a frequency band above 6 GHz (FR2). In the case of a sidelink-capable UE operating in FR2, an emitted radio beam of the sidelink-capable UE must be aimed directly at a second UE. Therefore, a beam alignment procedure is required between UEs that are in close proximity in indoor or outdoor scenarios. The standard 5G procedure relies, as explained above, on the received signal strength and does not take into account the spatial configuration of the UE-UE pair. This invention integrates spatial information into the 5G sidelink beam selection and optimisation process for scenarios where UEs are moving at a certain speed.

To enable a link between the UE-base station pair comprising the base station and the UE, the standardised 5G procedure of the 5G beam selection process comprises a beam management procedure. The beam management procedure is disclosed in 3GPP TR 38.802. The beam management procedure provides steps to determine a beam of the base station and a corresponding beam of the UE and/or vice versa. To provide a downlink of the base station to the UE, the base station has to select a transmission beam of the base station and the UE has to select a reception beam of the UE. To provide an uplink connection, the base station has to select a reception beam of the base station and the UE has to select a transmission beam of the UE. The beam management procedure comprises beam sweeping procedures. During the beam sweeping procedure, potential beams are provided by at least the UE or the base station. The potential beams are provided in different beam directions, covering the respective initial spatial search range.

Since the initial spatial search range of the base station and/or the initial spatial search range of the UE cover the respective preset spatial search range, the direction and/or a coverage of the initial spatial search range is specific to an arrangement of the base station - UE pair. Therefore, the initial spatial search range of the antenna device of the base station is not selected as a function of a direction of the UE with respect to the base station, and the initial spatial search range of the UE is also not selected as a function of the direction of the base station with respect to the UE.

As the respective initial spatial search range of the first antenna device also covers directions not directed to a second antenna device, the beam sweeping procedure is not efficient and therefore time-consuming.

It is an object of the invention to improve the efficiency of the beam selection and beam optimization process.

As a solution, a method to perform a beam management procedure, an antenna device, a control unit for an antenna device, a computer program product, and a computer-readable storage medium according to the independent claims are proposed.

Preferable embodiments can be derived from the features of the dependent claims.

According to a first aspect of the invention, a beam management procedure for selecting a beam of a first antenna device to establish a data link between the first antenna device and a second antenna device is provided. The first antenna device may be designed as an antenna device of an UE or as an antenna device of a base station. The second antenna device may be designed as an antenna device of an UE or as an antenna device of a base station. It may be possible that both of the antenna devices belong to sidelink-capable UEs. In that case, the data link between the first antenna device and the second antenna device may be a sidelink. The first antenna device may be configured as a transmission reception point.

In other words, the procedure is intended to select the beam of the first antenna device to be used by the first antenna device in a data link between the first antenna device and the second antenna device. The procedure may extend the beam management procedure disclosed in 3GPP TR 38.802. The beam to be selected by the first antenna device may be a transmission beam of the first antenna device and/or a reception beam of the first antenna device.

The method comprises a step of performing a beam sweeping procedure by the first antenna device. In the beam sweeping procedure potential beams of the first antenna device are provided in respective directions within a chosen spatial search range during a time interval of the beam sweeping procedure according to a predefined sweep specification. In other words during the beam sweeping procedure, the first antenna device provides potential beams of the first antenna device wherein the potential beams are oriented in respective directions. The respective potential beams are provided during the predefined time interval in the respective directions wherein the respective directions are oriented within the chosen spatial search range. The potential beams may be potential transmission beams and/or potential reception beams.

In a next step the first antenna device selects at least one of the potential beams, which meets a predefined selection criterion as the selected beam of the first antenna device to establish the data link of the first antenna device to the second antenna device. In other words, at least one of the potential beams fulfils the predefined selection criterion. The selection criterion may be related to a signal strength of the selected beam. The at least one selected beam is selected by the first antenna device for the link of the first antenna device to the second antenna device. The respective signal strengths may be measured and provided to the first antenna device by the second antenna device. The steps above may be steps disclosed in 3GPP TR 38.802. The first antenna device may comprise a control unit configured to control the first antenna device to perform these steps.

The method also comprises the following steps.

The method comprises a step of determining the spatial direction of the second antenna device with respect to the first antenna device as a function of location data of the first antenna device and location data of the second antenna device by the first antenna device. The location data may describe a geographical position of the respective antenna device. The location data may comprise respective GPS-data. In other words the first antenna device uses the location data of the first antenna device and the location data of the second antenna device to calculate the spatial direction of the second antenna device with respect to the first antenna device. The location data of the first antenna device and/or the location data of the second antenna device may be stored in the first antenna device and/or provided to the first antenna device using several ways.

The method comprises a step of determining the chosen spatial search range as a function of the spatial direction of the second antenna device with respect to the first antenna device according to a predefined range specification. In other words, depending on the spatial direction of the second antenna device with respect to the first antenna device of the device, the first antenna device defines the chosen spatial search range of the beam sweeping procedure. The chosen spatial search range may cover a limited spatial search range with respect to a maximum search range that can be accomplished by the first antenna device. In other words, the first antenna device is configured to provide the potential beams in different directions wherein the directions are a subset of the maximum spatial range. The chosen search range for the beam sweeping procedure is thus limited as a function of the spatial direction of the second antenna device with respect to the first antenna device. As an example, the chosen spatial search range may cover a directional search range around the direction of the second antenna device with respect to the first antenna device. The predefined range specification may specify that the chosen spatial search range must cover a search range of e.g. 45 degrees around the direction of the second antenna device with respect to the first antenna device. The chosen spatial search range may include an angle of 7.5 degrees to the left of the direction of the second antenna device and 7.5 degrees to the right of the direction of the second antenna device.

The invention has the advantage that the chosen spatial search range used in the beam sweeping procedure is limited to the chosen spatial search range towards the direction of the second antenna device. Therefore, the efficiency of the beam sweeping procedure is increased as search ranges directing in other directions than the direction of the second antenna device are not covered by the beam sweeping procedure.

According to a further embodiment of the invention, the location data of the first antenna device comprise an identifier of a geographic zone of a current location of the first antenna device and/or the location data of the second antenna device comprise an identifier of a geographic zone of a current location of the second antenna device. In other words, the location of the first antenna device and/or the location of the second antenna device can be described by the respective identifier of the geographical zone of the current location of the respective device. In other words, geographical zones may be predefined, each of the zones having a respective identifier. The respective antenna device may determine the zone in which it is located and determine the respective identifier of the zone. The identifier may be provided to another antenna device to provide the location to the other device.

According to a further embodiment of the invention, the location data of the first antenna device comprise motion data of the first antenna device and/or the location data of the second antenna device comprise motion data of the second antenna device. In other words, the location data may describe a location of the respective antenna device and a motion of the respective antenna device. The motion may describe a direction of the motion, a speed of the first antenna device, and/or an acceleration of the first antenna device. The motion data may also include a trajectory of the respective antenna device, which may comprise a motion in the future and/or a motion in the past. The embodiment has the advantage that a location of the respective antenna device may be predicted based on the motion data of the device. The prediction may improve the determination of the chosen spatial search range for the other antenna device to establish a link to the first antenna device.

According to a further embodiment of the invention, the method comprises a step of sending the location data of the first antenna device to the second antenna device. According to a further embodiment of the invention, the method comprises receiving the location data of the second antenna device by the first antenna device. In other words, the location data of the second antenna device is provided to the first antenna device and received by the first antenna device.

The location data of the first antenna device may be transmitted to the second antenna device by the first antenna device via a radio resource control layer. In other words, in order to provide the location data of the first antenna device to the second antenna device so that the second antenna device can limit its chosen search range, the first antenna device provides the location data of the first antenna device to the second antenna device. The radio resource control layer may follow the definition in 3GPP TS 38.331.

The sending of the location data of the first antenna device to the second antenna device may be performed by the first antenna device via a non-3GPP communication. For example, the location data of the first antenna device may be provided via Bluetooth or Wi-Fi. The first antenna device may distribute the location data via a non-3GPP access. Non-3GPP access between 5G networks and the first antenna device configured as a UE may follow the definition in clause 5.32 of 3GPP TS 23.501. According to a further embodiment of the invention, the location data of the first antenna device is sent by the first antenna device to the second antenna device via broadcast. In other words, the first antenna device provides the location data of the first antenna device by sending the location data via broadcast. The invention has the advantage that the location data is provided to multiple devices at the same time.

The location data of the first antenna device may be provided by the first antenna device in a system information block. In other words, the first antenna device may be configured to provide the location data of the first antenna device in the information block. The location data of the first antenna device may be provided in a new system information block or in an already defined system information block. In the latter case, the location data could be broadcasted, for example, in System Information Block 9, see clause 6.3.1 of 3GPP TS 38.331. The broadcast may occur in a lower frequency band or in a higher frequency band.

According to a further embodiment of the invention, the location data of the first antenna device is sent to a third antenna device by the first antenna device. In other words, the location data of the first antenna device may be provided to the second antenna device via a third antenna device. The transmission may be an indirect transmission. The location data of the first antenna device may be transmitted from the first antenna device to the second antenna device via a 5G connection. In other words, the location data of the first antenna device may be transmitted via a 5G connection between the first antenna device and the second antenna device via a base station. For example, the base station may receive the location data of the first antenna device and provide the location data of the first antenna device to the second antenna device via 5G.

According to a further embodiment of the invention, the method comprises a receipt of the location data of the second antenna device by the first antenna device. In other words, the first antenna device receives the location data of the second antenna device. The first antenna device may receive the location data of the second antenna device via a 3GPP or a non-3GPP connection.

According to a further embodiment of the invention, the location data of the second antenna device is received by the first antenna device from the third antenna device. In other words the first antenna device receives the location data of the second antenna device indirectly from the third antenna device. The third antenna device may be a base station or a UE providing the location data of the second antenna device to the first antenna device. The location data of the second antenna device can be provided to the first antenna device by broadcasting from a base station. The embodiment has the advantage that the location data of the second antenna device can be provided even if the second antenna device is too far away for direct transmission from the first antenna device.

According to a further embodiment of the invention, the method comprises a determination by the first antenna device of a number of potential beams in the chosen spatial search range as a function of an emission characteristic of the first antenna device, and performing the beam sweeping procedure using the number of potential beams in the chosen spatial search range by the first antenna device. In other words, the first antenna device is configured to provide the number of beams in the chosen spatial search range. The number of potential beams depends on the emission characteristics of the first antenna device. In a variation of this invention, the first antenna device and/or the second antenna device consider radio antenna emission characteristics when calculating the number of the beams within the chosen spatial search range. An example of a parameter of the emission characteristics is the 3 dB beam width.

According to a further embodiment of the invention, the method comprises the step of the first antenna device determining the chosen spatial search range depending on a boresight direction of the first antenna device point of the device and/or the orientation of the boresight direction of the first antenna device relative to the spatial direction of the second antenna device. In a variation of this invention, the first antenna device and/or the second antenna device take into account the boresight direction of their antenna and their orientation with respect to the first antenna device-second antenna device line of sight when deciding which beam angles and/or reception angles to scan during procedures P1, P2 and P3 disclosed in clause 6.1.6.1 of 3GPP TR 38.802.

According to a further embodiment of the invention, the method comprises a step of receiving location data of at least two candidate antenna devices by the first antenna device. In other words, the location data of one or more of the candidate antenna devices is received by the first antenna device. The candidate antenna devices may comprise dedicated relays, vehicle-mounted base stations that leverage Integrated Access and Backhaul, IAB, or a normal sidelink relay UE. The method comprises a step in which the first antenna device verifies the fulfilment of a communication condition by the respective location data of the candidate antenna device. In a next step, the first antenna device selects at least one of the candidate antenna devices whose location data satisfies the communication condition. The selected candidate antenna device becomes the second antenna device for communication. The method comprises the step of selecting the second antenna device by the first antenna device depending on the location data of the candidate antenna devices. In other words, the second antenna device is selected out of the candidate antenna devices dependent on the location of the candidate antenna devices. It may be possible that the candidate antenna devices are located in respective different areas in relation to the first antenna device. The first antenna device may select one candidate antenna device as the second antenna device whose location data meets a predefined condition. The condition may require that the location data of the candidate antenna device must be within a predefined range to the location data of the first antenna device. The method of the selection of the second antenna device by the first antenna device depending on the location data of the candidate antenna devices may form an independent aspect of an invention.

The respective location data of the candidate antenna devices may comprise a zone identifier identifying a cell or a geographical zone of the location data of the respective candidate antenna device. In other words, the location data of the UE may be in respective zones or cells, the zones or cells being identified by a zone identifier. The zone ID may be provided to the first antenna device together with the location data of the respective candidate antenna device. The condition to be satisfied by the location data of the candidate antenna device is related to the zone ID assigned to the location data of the candidate antenna device. For example, the first antenna device may examine the zone ID of its zone or cell. The first antenna device may compare its zone ID with the zone IDs associated with the location data of the candidate antenna device. In a next step, the first antenna device selects at least one of the candidate antenna devices whose zone ID fulfils the condition as the second antenna device for communication.

The location data of the candidate antenna device may also comprise motion data describing a movement of the candidate antenna device. In other words, the location data information of the candidate antenna device comprises a current speed and/or a current direction or another parameter describing the movement of the candidate antenna device. The first antenna device may determine the second antenna device based on the movement of the candidate antenna device. The criterion may comprise that the second antenna device must move in the same direction as the first antenna device or within a predefined speed range. It may be that only the candidate antenna device that moves in the direction of the first antenna device fulfils the criterion.

According to a further embodiment of the invention, determining, by the first antenna device, of the chosen spatial search range comprises a transmission of calculation data to a third antenna device and a reception of calculation result data from the third antenna device. In other words, to improve the determination of the chosen spatial search range, at least part of the determination may be performed by the third antenna device. The first antenna device may provide calculation data to the third antenna device so that at least some calculations may be performed by the third antenna device. The third antenna device may provide the results to the first antenna device. The embodiment has the advantage that complex calculations may be outsourced to the third antenna device. The third antenna device may be a base station comprising computer devices for complex calculations.

In applications or situations which might be possible, but which are not specified specifically, it may be provided that a failure signal and/or a request for inputting a user confirmation can be output and/or a standard configuration and/or a predefined initial status can be suspended.

A second aspect is related to a first antenna device configured to establish a data link between the first antenna device and a second antenna device. The first antenna device may be configured as an antenna device for a base station and/or as an antenna device for a UE.

The first antenna device is configured to perform a beam sweeping procedure, wherein potential beams of the first antenna device are provided in respective directions within a chosen spatial search range during a time interval of the beam sweeping procedure according to a predefined sweep specification.

The first antenna device is configured to define at least one of the beams meeting a predefined criterion as the beam of the first antenna device to establish the data link of the first antenna device to the second antenna device.

The first antenna device is configured to determine a direction of the second antenna device with respect to the first antenna device as a function of a location data of the first antenna device and a location data of the second antenna device.

The first antenna device is configured to determine the chosen spatial search range as a function of the spatial direction of the second antenna device with respect to the first antenna device according to a predefined range specification, wherein the predefined spatial direction range is constrained against a maximum spatial direction range.

The first antenna device may be configured to perform a method according to the first aspect of the invention. The first antenna device performs the steps of the method according to the first aspect of the invention.

A third aspect of the invention is related to a control unit for an antenna device configured to control the first antenna device to establish a data link between the first antenna device and a second antenna device.

The control unit is configured to control the first antenna device to perform a beam sweeping procedure, wherein potential beams of the first antenna device are provided in respective directions within a chosen spatial search range during a time interval of the beam sweeping procedure according to a predefined sweep specification.

The control unit is configured to define at least one of the beams meeting a predefined criterion as the beam of the first antenna device to establish the data link of the first antenna device to the second antenna device.

The control unit is configured to determine a direction of the second antenna device with respect to the first antenna device as a function of a location data of the first antenna device and a location data of the second antenna device.

The control unit is configured to determine the chosen spatial search range as a function of the spatial direction of the UE with respect to the first antenna device according to a predefined range specification, wherein the predefined spatial direction range is constrained against a maximum spatial direction range.

A fourth aspect of the invention is related to a computer program product comprising program code for performing a method according to the first aspect. The computer program product may also be regarded to a computer program.

A fifth aspect of the invention is related to a computer-readable storage medium comprising at least the computer program product according to the fourth aspect.

The control unit can be understood as a hardware module or as a software module. In particular, a module may also comprise a hardware and a software portion implemented on the hardware. A software module may be understood as a portion of software code functionally connected and combined to a unit. A software module may comprise or implement several processing steps and/or data structures. A method step of providing a software module may be understood to comprise providing a respective software code in a computer readable fashion on a computer readable storage medium.

The control unit may in particular be understood as a data processing device, which comprises processing circuitry. The computing unit may therefore in particular process data to perform computing operations. This may also include operations to perform indexed accesses to a data structure, for example a look-up table.

In particular, the control unit may include one or more computers, one or more microcontrollers, and/or one or more integrated circuits, for example, one or more application-specific integrated circuits, ASIC, one or more field-programmable gate arrays, FPGA, and/or one or more systems on a chip. The computing unit may also include one or more processors, for example one or more microprocessors, one or more central processing units, CPU, one or more graphics processing units, GPU, and/or one or more signal processors, in particular one or more digital signal processors, DSP. The computing unit may also include a physical or a virtual cluster of computers or other of said units.

In various embodiments, the control unit includes one or more hardware and/or software interfaces and/or one or more memory units.

A memory unit may be implemented as a volatile data memory, for example a dynamic random access memory, DRAM, or a static random access memory, SRAM, or as a non-volatile data memory, for example a read-only memory, ROM, a programmable read-only memory, PROM, an erasable read-only memory, EPROM, an electrically erasable read-only memory, EEPROM, a flash memory or flash EEPROM, a ferroelectric random access memory, FRAM, a magnetoresistive random access memory, MRAM, or a phase-change random access memory, PCRAM.

Independent of the grammatical term usage, individuals with male, female or other gender identities are included within the term.

Further features of the invention are apparent from the claims, the figures and the figure description. The features and combinations of features mentioned above in the description as well as the features and combinations of features mentioned below in the description of figures and/or shown in the figures may be comprised by the invention not only in the respective combination stated, but also in other combinations. In particular, embodiments and combinations of features, which do not have all the features of an originally formulated claim, are also comprised by the invention. Moreover, embodiments and combinations of features which go beyond or deviate from the combinations of features set forth in the recitations of the claims are comprised by the invention.

In the following, the invention is explained in detail with reference to specific exemplary implementations and respective schematic drawings. In the drawings, identical or functionally identical elements may be denoted by the same reference signs. The description of identical or functionally identical elements is not necessarily repeated with respect to different figures.
- FIG 1a: shows a schematic illustration of beam selection procedure P1 according to the state of the art;
- FIG 1b: shows a schematic illustration of beam selection procedure P2 according to the state of the art;
- FIG 1c: shows a schematic illustration of beam selection procedure P3 according to the state of the art;
- FIG 2: shows a schematic illustration of an antenna device and a second antenna device performing beam sweeping procedures;
- FIG 3: shows a schematic illustration of a sidelinkcapable antenna device- and UE-type relays performing beam sweep procedures in a mobile scenario;
- FIG 4: shows another schematic illustration of a sidelinkcapable antenna device and UE type relays performing beam sweep procedures in a mobile scenario; and
- FIG 5: shows a schematic illustration of a method.

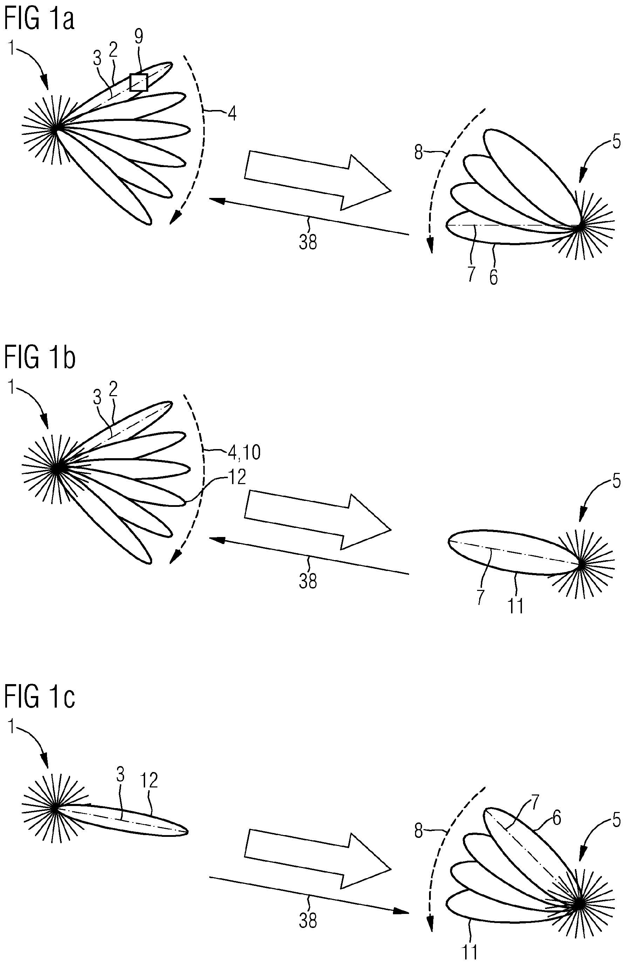

FIG 1a shows a schematic illustration of beam selection procedure P1 according to the state of the art.

The figures FIG 1a, FIG 1b, and FIG 1c show a schematic illustration of the state-of-the-art beam sweep procedures as described in clause 6.1.6.1 of 3GPP TR 38.802. Details of the physical layer procedures may be provided in the standard ETSI TS 138 211.

In the procedure P1, the first antenna device 1 may perform a beam sweeping procedure in which respective potential beams 2 are emitted in respective directions 3 within a maximum directional search range 4 of the first antenna device 1. The potential beams 2 may be possible transmission beams 12. The first antenna device 1 transmits synchronisation signal blocks 9 in the directions 3 of the potential beams 2. Each of the synchronisation signal blocks 9 comprises a unique label of the respective potential beam 2.

A second antenna device 5 that may be a UE can receive the potential beams 2 in a wide angle not shown in FIG 1a. The second antenna device 5 may receive the synchronisation signal blocks 9 and may measure respective signal strength of the potential beams 2. The second antenna device 5 may provide the measured signal strengths to the first antenna device 1 in a signal strength message 38.

The second antenna device 5 may also perform a corresponding beam sweeping procedure, wherein the second antenna device 5 may provide the potential beams 6 of the second antenna device 5 in respective directions 7 within the maximum search range 8 of the second antenna device 5.

According to procedure P1, the first antenna device 1 selects one of the potential beams 2 of the first antenna device 1 as a transmission beam 12 for downlink transmissions between the first antenna device 1 and the second antenna device 5,see Fig. 1c. This can be done after the second antenna device 5 has indicated to the first antenna device 1 during random channel access which beam of the first antenna device 1 provides the best signal reception.

FIG 1b shows a schematic illustration of beam selection procedure P2 according to the state of the art.

In the P2 procedure, the first antenna device 1 may repeat the beam sweeping procedure of P1, or the first antenna device 1 may perform the beam sweeping procedure in a reduced spatial search range 10 that may comprise finer increments around the transmission beam 12 of the first antenna device 1. The first antenna device 1 may repeat the beam sweep procedure within a maximum search range 4 or within the restricted search range 10. The second antenna device 5 may direct one of its potential beams 11 in a direction towards the first antenna device 1. After this procedure, the second antenna device 5 may provide the signal strength to the first antenna device 1 in the signal strength message 38. The first antenna device 1 may elect its downlink transmission beam 12 as a function of the signal strengths.

FIG 1c shows a schematic illustration of beam selection procedure P3 according to the state of the art.

In the procedure P3, the second antenna device 5 can perform the beam sweeping procedure in order to provide the potential beams 6 of the second antenna device 5 in the respective directions 7. The first antenna device 1 measures a signal strength of signals received from the second antenna device 5 of the potential beams 6 provided by the second antenna device 5. The first antenna device 1 may use the transmission beam 12, elected by the second antenna device 5. The first antenna device 1 may report the signal strengths of the beams of the first antenna device 1 to the second antenna device 5 in the signal strength message 38. Using this information, the second antenna device 5 can select one of the potential beams 6 as the transmission uplink beam 11.

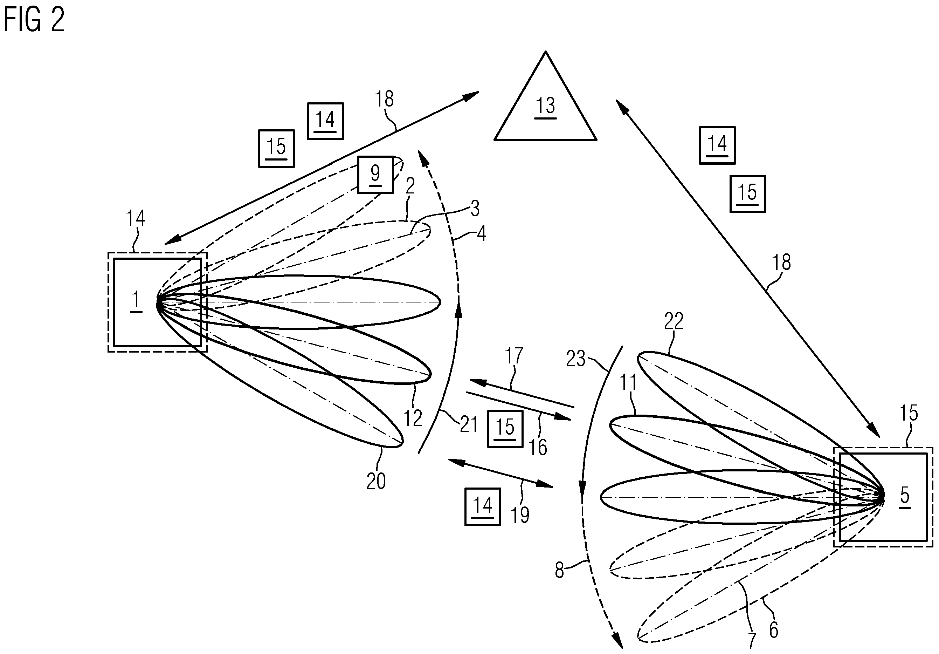

FIG 2 shows a schematic illustration of an antenna device and a second antenna device performing beam sweeping procedures according to our invention.

The first antenna device 1 may be located in a base station configured to provide a connection to the second antenna device 5, wherein the second antenna device 5 is a UE. The first antenna device 1 may be configured to establish a downlink and/or an uplink connection to the second antenna device 5 for data transmission. The first antenna device 1 may also be arranged in a UE to provide a sidelink connection to the second antenna device 5. The first antenna device 1 may be configured to perform the beam sweeping procedure as described in FIG 1a, FIG 1b and FIG 1c. The second antenna device 5 may also be configured to perform a beam sweeping procedure as described in FIG 1a, FIG 1b and FIG 1c. The first antenna device 1 may be configured to cover a maximum spatial search range 4 of antenna device 1 during the beam sweep procedure.

In order to reduce the time needed for performing the beam sweeping procedure, the first antenna device 1 may be configured to determine a direction 16 of the second antenna device 5 with respect to the first antenna device 1. The direction 16 may be calculated by the first antenna device 1 by use of location data 14 of the first antenna device 1 and location data 15 of the second antenna device 5. The second antenna device 5 may also be configured to calculate a direction 17 of the first antenna device 1 with respect to the second antenna device 5 based on the location data 15 of the second antenna device 5 and the location data 14 of the first antenna device 1.

Therefore, to calculate the directions 16, 17, both the location data 14, 15 of the first antenna device 1 and the second antenna device 5, respectively, must be provided. Antenna device 1 and the second antenna device 5 may have stored their respective location data 14, 15. To receive the location data 14, 15 of the communication partner 1, 5, the respective location data 14, 15 must be exchanged between the first antenna device 1 and the second antenna device 5.

The second antenna device 5 may be configured to send its location data 15 to the first antenna device 1 to enable calculation of the direction 16 of the second antenna device 5 with respect to the first antenna device 1. The second antenna device 5 may use an alternative link of a direct connection 19 to transmit the location data 15 of the second antenna device 5 to the first antenna device 1. The transmission may be made via an already established 5G link in a lower frequency band or in a higher frequency band between the second antenna device 5 and the first antenna device 1. Transmission via 5G may be made via a third antenna device 13 like a base-station-enabled connection over a shared 5G network 18. The location data 15 of the second antenna device 5 may also be provided to the first antenna device 1 via a non-3GPP technology such as Wi-Fi or Bluetooth.

The first antenna device 1 may provide its location data 14 to the second antenna device 5 via a 5G connection. If the first antenna device 1 is part of a base station, the first antenna device 1 may broadcast its location data 14 via a radio resource control layer as specified in 3GPP TS 38.213. The location data 14 of the first antenna device 1 may be broadcasted either in a new system information block or in an existing block. In the latter case, the location data 14 of the first antenna device 1 could be broadcasted in System Information Block 9 as defined in clause 6.3.1 of 3GPP TS 38.213. The broadcast may take place in a lower frequency band of 5G.

The first antenna device 1 may also broadcast the location data 14 of the first antenna device 1 to the second antenna device 5 via non-3GPP access. Preferably this can be done via broadcast. For example, the System Information Block mentioned above can be reused. Non-3GPP access between 5G networks and second antenna device 5 may be implemented as described in clause 5.32 of 3GPP TS 23.501.

The location data 15 of the second antenna device 5 and the location data 14 of the first antenna device 1 may also be provided by the third antenna device 13. The third antenna device 13 may know the location data 14 of the first antenna device 1 and/or the location data 15 of the second antenna device 5 through links 18 to the first antenna device 1 and/or the second antenna device 5. The third antenna device 13 may be an external base station or a dedicated operation support device configured to provide the respective location data 14, 15. The dedicated operation support device may be configured to trace the location data 14, 15 of the first antenna devices 1, 5. The dedicated operation support device may provide the location data 15 of the second antenna device 5 to the first antenna device 1 and the location data 14 of the first antenna device 1 to the second antenna device 5 to support the beam sweeping procedures of the devices.

The first antenna device 1 may determine a chosen spatial search range 21 depending on the direction 16 of the second antenna device 5 with respect to the first antenna device 1, wherein the coverage of the chosen spatial search range may be reduced compared to a maximum search range 4 of the first antenna device 1. Therefore, the search range for the beam sweep range method may be limited to the chosen spatial search range 21 comprising chosen beams 20.

The second antenna device 5 may also determine a chosen spatial search range 23 depending on the direction 17 of the first antenna device 1 with respect to the second antenna device 5, wherein the coverage of the chosen spatial search range 23 may be reduced compared to a maximum search range 8 of the second antenna device 5. Therefore, the search range for the beam sweep range method may be limited to the chosen spatial search range 23 comprising chosen beams 22. The first antenna device 1 and/or the second antenna device 5 may also take into account a velocity of antenna device 1 and/or a velocity of the second antenna device 5. In other words, the devices 1, 5 may consider a movement of the two devices 1, 5 in relation to each other to select their respective chosen spatial search range 21, 23. The respective chosen spatial search ranges 21, 23 may be selected such that they cover a future direction of the communication partner. The centre of the respective chosen spatial search ranges 21, 23 may be directed towards a predicted position of the partner 1, 5.

The first antenna device 1 and/or the second antenna device 5 may take into account the radiation characteristics of their radio antennas to calculate a number of potential beams 20, 22 that fit within the chosen spatial search range 21, 23. An example of a pertinent parameter is the 3 dB beamwidth.

The first antenna device 1 and/or the second antenna device 5 may take into account a boresight direction of their antennas and their orientation with respect to the directional line of sight when determining the predefined spatial directional search area to be scanned during beam sweeping procedures such as P1, P2 and P3.

Updated location data 14 of the first antenna device 1 may be transmitted to the second antenna device 5 by the first antenna device 1. In other words, the location data 14 of the first antenna device 1 may change during or after the beam sweeping procedure. The first antenna device 1 may provide the updated location data 14 of the first antenna device 1 to the second antenna device 5. The provision of updated location data 15 has the advantage that the second antenna device 5 may change or adapt the beam depending on the updated location data 15 of the first antenna device.

The first antenna device 1 may receive the updated location data 15 of the second antenna device 5. In other words, the first antenna device 1 receives the updated location data 15 of the second antenna device 5. The first antenna device 1 may change the direction of the potential beams 2 or the selected beams 20 according to the updated location data 15 of the second antenna device 5. A continuously updated location data 15 may be used for beam steering and reselection during a motion of the second antenna device 5 or a motion of the first antenna device 1, or a motion of both 1, 5.

The first antenna device 1 may update the spatial direction 16 of the second antenna device 5 with respect to the first antenna device 1. In other words, the location data 15 of the second antenna device 5 and/or the location data 14 of the first antenna device 1 may change. Therefore, the first antenna device 1 calculates the spatial direction 16 of the second antenna device 4 with respect to the first antenna device 1 based on the updated location data 15 of the second antenna device 5 and/or the updated location data 14 of the first antenna device 1. In a next step, the beam of the first antenna device 1 is updated by the first antenna device 1 depending on the updated spatial direction 16 of the second antenna device 5 with respect to the first antenna device 1. In other words, the first antenna device 1 updates the beam to provide the link to the second antenna device 5 depending on the updated spatial direction 16 of the second antenna device 5 with respect to the first antenna device 1. The updated beam may be the same as the previous beam or the updated beam may be a different beam.

The first antenna device 1 and/or second antenna device 5 may provide their updated location data 14, 15 to the other antenna device 1, 5. The updated location data 14, 15 may be used for beam steering and beam reselection during second antenna device 5 or antenna device 1 movement. Conventional state of the art beam selection may be used if the above procedure results in a suboptimal link strength.

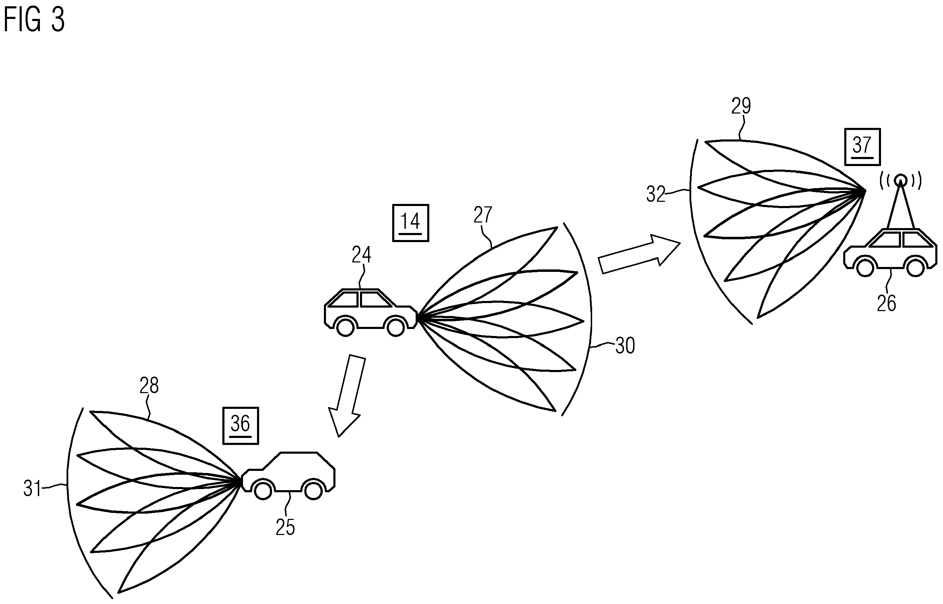

FIG 3 shows a schematic illustration of a mobile sidelink-capable antenna device 24, a first candidate antenna device 25 and a second candidate antenna device 26. Also shown are potential beam sweeps as part of beam sweep procedures.

The sidelink-capable antenna device 24 may be an UE that may be allowed to operate in the FR2 spectrum. The sidelink-capable antenna device 24 may be configured to select a beam that is aligned with the first candidate antenna device 25. The condition for the sidelink- capable antenna device 24 to select one of the candidate antenna devices 25, 26 as the second antenna device 5 for a connection may comprise that a relative sidelink range between the sidelink-capable antenna device 24 24 and the second candidate antenna device 25 should be less than a certain threshold, e.g. 'x' m, where can be any integer value 5 between 0-10 m.

A direction of movement of the sidelink- capable antenna device 24 and/or the second candidate antenna device 25, may also play a role, together with location data 14 of the sidelink-capable antenna device 24 and location data 36, 37 of the candidate antenna devices 25, 26 in the vicinity of the sidelink-capable antenna device 24. A coverage of the spatial search ranges 31, 32 comprising the potential beams 28, 29 of the candidate antenna devices 25, 26 may also be included in a procedure to select the second antenna device 5.

A first candidate antenna device 25 may be closer to the sidelink-capable antenna device 24 than a second candidate antenna device 26, but as the first candidate antenna device 25 may be moving at a similar or higher speed in the opposite direction to the sidelink-capable antenna device 24, beam alignment with the first candidate antenna device 25 does not make sense for an extended connection durations. Therefore the chosen spatial search range 30 comprising the potential beams 27 does not cover a direction towards the first candidate antenna device 25. Therefore, only the second candidate antenna device 26 may be suitable for a connection and chosen spatial search range 30 may cover a direction to the second candidate antenna device 26. The relative sidelink range for beam alignment can be calculated by sidelink positioning reference signal SL-PRS detection, use of Global Navigation Satellite System GNSS, or any other cellular or hybrid localisation method.

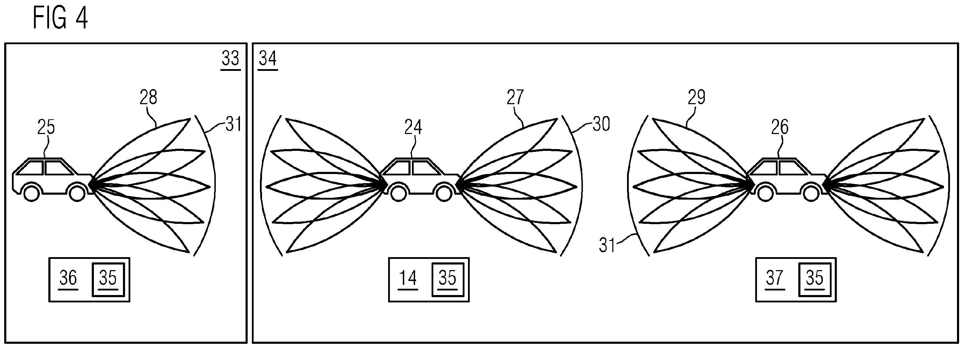

FIG 4 shows a schematic illustration of a sidelink-capable antenna device 24 and candidate antenna devices 25, 26 performing beam sweeping in a mobile scenario.

Another way of restricting or reducing beam sweeping to be able to select a beam within a valid time is to use geo-location data zone concept for directional sensing in sidelink. The available location data 36, 37 of candidate antenna devices 25, 26 within respective zones 33, 34 can be conveyed via a defined information element within the Radio Resource Control, RRC, e.g. as beamzone ID 35. In this concept, the sidelink-capable antenna device 24 only needs to beam sweep or directional sense with a candidate antenna device 25 that shares the same beamzone ID 35 with the sidelink-capable antenna device 24. The shape of the zones 33, 34 can be any geometric shape such as a square, rectangle or hexagon. If the zone 33, 34 is assumed to be a hexagon, then it mimics the cell sector and the beam sweep of the sidelink-capable antenna device 24 can be restricted to any zone 33, 34 in which the sidelink-capable antenna device 24 is located.

In addition, beam reselection can be triggered when the sidelink-capable antenna device 24 moves from a first zone 33 to a second zone 34.

A further refinement of this zone-based beam management is the additional use of a sidelink Channel State Information Reference Signal SL-CSI-RS as disclosed in 3GPP, "TS 38.211.

The Channel State Information Reference Signal, in the case of an established unicast or multicast link, can further assist the sidelink-capable antenna device 24 in down-selecting the correct beam for transmission. A certain threshold can be configured by the Radio Resource Control, MAC Control Element MAC-CE according to 3GPP TS 38.213 or any other higher layer parameter for the beam selection procedure.

Predictive beam management may be implemented, particularly in mobility scenarios. The sidelink-capable second antenna device 5 may use the information available through the messages such as CAM, DENM or V2X, P2X messages as defined in ETSI to down-select the beam selection procedure. A general status update of a second antenna device 5 includes information such as speed, direction of travel and other vehicle specific configuration parameters.

Depending on the scenario, some of the candidate antenna devices 25, 26 may be suitable for a sidelink connection, while some of the candidate antenna devices 25, 26 may not be suitable for the sidelink connection. The sidelink-capable antenna device 24 may select a subset of suitable second antenna devices 25, 26 with which beam selection can be performed. This is in the direction of a sidelink-capable antenna device 24 having the power and capability to process the AI algorithms that will assist in predictive beam management. Prediction can be performed by the sidelink-capable antenna device 24 when, for example, it is in an out-of-coverage scenario. However, in scenarios where candidate antenna devices 25, 26 are in coverage and partial coverage, the gNB and/or base station 13 can predict the candidate antenna device 25, 26 as a sidelink partner for the sidelink-capable antenna device 24.

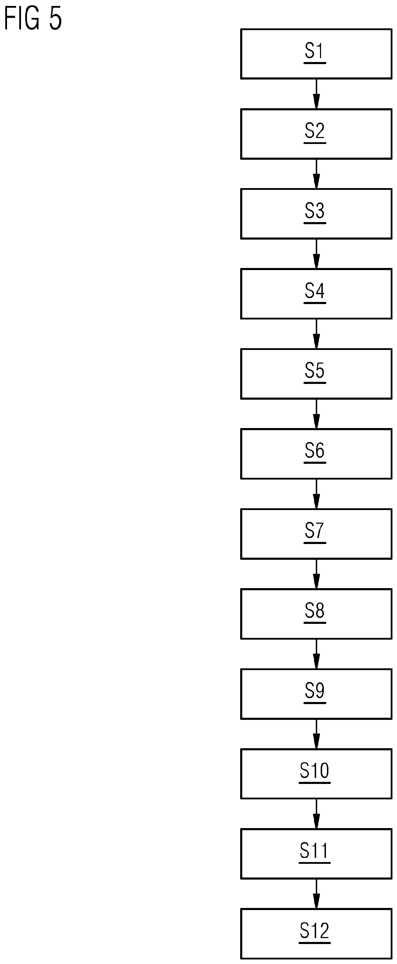

FIG 5 shows a schematic illustration of a method.

In a step S1, the first antenna device 1 can infer its position, for instance by receiving and evaluating GNSS signals and generate respective position data 14 describing the position of the first antenna device 1.

In a step S2, a second antenna device 5 may also infer its position, for instance by receiving and evaluating GNSS signals and may generate respective position data 15 describing the position of the second antenna device 1.

In an S3 step, the second antenna device 5 may send its location data 15 to the first antenna device 1 to initiate an uplink or downlink to the first antenna device 1. The transmission can be done via 5G or other wireless technologies.

In a next step S4, the first antenna device 1 may receive the location data 15 of the second antenna device 5. The first antenna device 1 may also transmit its location data 14 to the second antenna device 5. The transmission may also be performed by 5G or other wireless technologies.

In a next step S5, the second antenna device 5 may receive the location data 14 of the first antenna device 1.

In a next step S6, the first antenna device 1 may calculate the spatial direction 16 of the second antenna device 5 with respect to the first antenna device 1 using the location data 14 of the first antenna device 1 and the location data 15 of the second antenna device 5.

In a next step S7, the second antenna device 5 may calculate the spatial direction 17 of the first antenna device 1 with respect to the second antenna device 5 based on the location data 14 of the first antenna device 1 and the location data 15 of the second antenna device 5.

The first antenna device 1 may initiate a beam sweep procedure S8 in which the first antenna device 1 may emit potential beams 2 within a chosen spatial search range 21. The chosen spatial search range 21 is selected by the first antenna device 1 depending on the direction 16 of the second antenna device 5 with respect to the first antenna device 1. The potential beams 2 may be emitted in a beam sweep sequence in which the potential beams 2 are oriented in respective directions.

The second antenna device 5 may also calculate the chosen spatial search range 23 for the beam sweeping procedure performed by the second antenna device 5 (step S9). The predefined special directional search range is calculated considering the direction 17 of the first antenna device 1 with respect to the second antenna device 5.

In a next step S10, the first antenna device 1 can provide transmission beams 12, in which each of the beams is provided with a Synchronization Signal Block 9.

In a next step S11, the second antenna device 5 may also perform the beam sweeping procedure wherein the second antenna device 5 provides possible beams 6 in the respective directions. The second antenna device 5 may receive the Synchronization Signal Block 9 and may determine signal strengths of the respective beams 2 received by the second antenna device 5.

In a next step S12, the first antenna device 1 may receive a signal from the second antenna device 5 indicating the the first antenna device beam 2 with the highest signal strengths. In next steps, the procedure may be repeated with opposite roles to determine the beams of the second antenna device 5.

## Claims

1. Method to perform a beam management procedure for selecting a beam (12) of a first antenna device (1) for a data link between the first antenna device (1) and a second antenna device (5),
comprising the following steps:
- performing a beam sweeping procedure by the first antenna device (1), wherein potential beams (2) of the first antenna device (1) are provided in respective beam directions (3) within a chosen spatial search range (21) during a time interval of the beam sweeping procedure according to a predefined sweep specification; and
- defining at least one of the potential beams (2) meeting a predefined criterion as a selected beam (12) of the first antenna device (1) for the data link of the first antenna device (1) to the second antenna device (5) by the first antenna device (1);
**characterized in that**
the method comprises the following steps:
- determining a spatial direction (16) of the second antenna device (5) with respect to the first antenna device (1) as a function of location data (14) of the first antenna device (1) and location data (15) of the second antenna device (5) by the first antenna device (1); and
- determining the chosen spatial search range (21) as a function of the spatial direction (16) of the second antenna device (5) with respect to the first antenna device (1) according to a predefined range specification by the first antenna device (1), wherein the chosen spatial search range (21) is constrained against a maximum spatial search range (4) of the first antenna device (1).

2. Method according to claim 1, wherein the location data (14) of the first antenna device (1) comprise an identifier of a geographic zone of a current location of the first antenna device (1) and/or the location data (15) of the second antenna device (5) comprise an identifier of a geographic zone of a current location of the second antenna device (5).

3. Method according to claim 1 or 2, wherein the location data (14) of the first antenna device (1) comprise motion data of the first antenna device (1) and/or the location data (15) of the second antenna device (5) comprise motion data of the second antenna device (5).

4. Method according to any one of the preceding claims, comprising the step of:
- sending the location data (14) of the first antenna device (1) to the second antenna device (5) by the first antenna device (1).

5. Method according to claim 4, comprising the step of:
- sending the location data (14) of the first antenna device (1) to a third antenna device by the first antenna device (1) .

6. Method according to any one of the preceding claims, comprising the step of:
- receiving the location data (15) of the second antenna device (5) by the first antenna device (1).

7. Method according to claim 6, wherein the location data (15) of the second antenna device (5) is received by the first antenna device (1) from the third antenna device.

8. Method according to any one of the preceding claims, comprising steps of:
- determining a number of the potential beams (2) to be provided in the chosen spatial search range (21) depending on an emission characteristic of the first antenna device (1) by the first antenna device (1); and
- performing the beam sweeping procedure providing the number of the potential beams (2) in the chosen spatial search range (21) by the first antenna device (1).

9. Method according to any one of the preceding claims, comprising a step of:
- determining, by the first antenna device (1), the chosen spatial search range (21) depending on a boresight direction of the first antenna device (1) and/or the orientation of the boresight direction of the first antenna device (1) toward the spatial direction (16) of the second antenna device (5) with respect to the first antenna device (1).

10. Method according to one of the preceding claims, comprising steps of:
- receiving respective location data (36, 37) of at least two candidate antenna devices (25, 26) by the first antenna device (1);
- selecting one of the at least two candidate antenna devices (25, 26) as the second antenna device (5) by the first antenna device (1) depending on the location data (36, 37) of the at least two candidate antenna devices (25, 26).

11. Method according to one of the preceding claims, wherein the determining, by the first antenna device (1), of the chosen spatial search range (21) comprises a transmission of calculation data to a third antenna device and a reception of calculation result data from the third antenna device.

12. First antenna device (1) configured to establish a data link between the first antenna device (1) and a second antenna device (5),
wherein the first antenna device (1) is configured to:
- perform a beam sweeping procedure, wherein potential beams (2) of the first antenna device (1) are provided in respective beam directions (3) within a chosen spatial search range (21) during a time interval of the beam sweeping procedure according to a predefined sweep specification; and
- define at least one of the potential beams (2) meeting a predefined criterion as the beam (12) of the first antenna device (1) to establish the data link of the first antenna device (1) to the second antenna device (5);
**characterized in that**
the first antenna device (1) is configured to
- determine a spatial direction (16) of the second antenna device (5) with respect to the first antenna device (1) as a function of location data (14) of the first antenna device (1) and location data (15) of the second antenna device (5);
and
- determine the chosen spatial search range (21) as a function of the spatial direction (16) of the second antenna device (5) with respect to the first antenna device (1) according to a predefined range specification, wherein the chosen spatial search range (21) is constrained against a maximum spatial search range (4) of the first antenna device (1).

13. control unit for an antenna device, wherein
the control unit is configured to
- control the first antenna device (1) to perform a beam sweeping procedure, wherein potential beams (2) of the first antenna device (1) are provided in respective beam directions (3) within a chosen spatial search range (21) during a time interval of the beam sweeping procedure according to a predefined sweep specification; and
- define at least one of the potential beams (2) meeting a predefined criterion as the beam (12) of the first antenna device (1) to establish the data link of the first antenna device (1) to the second antenna device (5);
**characterized in that**
the control unit is configured to
- determine a spatial direction (16) of the second antenna device (5) with respect to the first antenna device (1) as a function of location data (14) of the first antenna device (1) and location data (15) of the second antenna device (5);
and
- determine the chosen spatial search range (21) as a function of the spatial direction (16) of the second antenna device (5) with respect to the first antenna device (1) according to a predefined range specification, wherein the chosen spatial search range (21) is constrained against a maximum spatial search range (4) of the first antenna device (1).

14. A computer program product comprising program code for performing a method according to one of the claims 1 to 11.

15. A computer-readable storage medium comprising at least the computer program product according to claim 14.
